# FASCICULE DE BREVET EUROPEEN

(11) **EP 3 847 362 B1**
(45) Date de publication et mention de la délivrance du brevet: **15.11.2023**
(21) Numéro de dépôt: 19783591.1
(22) Date de dépôt: 04.09.2019
(51) Int. Cl.: F02K 1/72, F02K 3/06, B64D 29/06, B64D 29/08

(54) **INVERSEUR DE POUSSÉE À STRUCTURE MOBILE EN C POUR ENSEMBLE PROPULSIF D'AÉRONEF, ET PROCÉDÉ DE MAINTENANCE S'Y RAPPORTANT**
SCHUBUMKEHRVORRICHTUNG MIT BEWEGLICHER STRUKTUR IN C-FORM FÜR EINE FLUGZEUGTRIEBWERKSANORDNUNG UND ENTSPRECHENDES WARTUNGSVERFAHREN
THRUST REVERSER WITH MOVABLE STRUCTURE IN A C-SHAPE FOR AN AIRCRAFT PROPULSION ASSEMBLY, AND RELATED MAINTENANCE METHOD

(30) Priorité: 07.09.2018 FR 1858046
(43) Date de publication de la demande: 14.07.2021
(73) Titulaire: Safran Nacelles, 76700 Gonfreville-l'Orcher (FR)
(72) Inventeur: CARUEL, Pierre, 76700 Gonfreville-l'Orcher (FR); ANAND, Shwetanjana, 76700 Gonfreville-l'Orcher (FR); BOILEAU, Patrick, 76700 Gonfreville-l'Orcher (FR)
(74) Mandataire: Germain Maureau
(86) Numéro de dépôt international: PCT/FR2019/052045
(87) Numéro de publication internationale: WO 2020/049258

(56) Documents cités:
- FR-A1- 2 914 700
- FR-A1- 2 952 908
- US-A1- 2011 062 279

## Description

La présente invention se rapporte au domaine des inverseurs de poussée pour ensemble propulsif d'aéronef, plus particulièrement des inverseurs de poussée comprenant une structure mobile en translation entre une position de poussé directe et une position d'inversion de poussée.

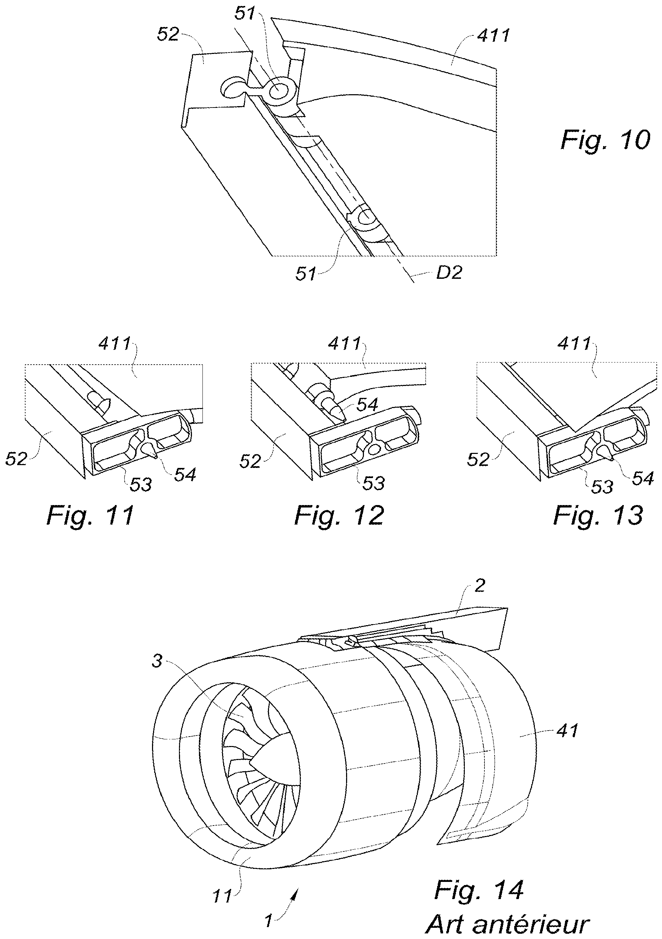

On connaît dans l'état de la technique antérieure des inverseurs de poussée de ce type dans lesquels la structure mobile est formée de deux demi-structures. Typiquement, une telle structure mobile, dite en C (C-Duct), est susceptible d'être placée dans une position de maintenance par ouverture vers l'extérieur des demi-structures. La figure 14 montre un ensemble propulsif 1 de la technique antérieure avec structure mobile 41 en position de maintenance.

Un ensemble propulsif de l'art antérieur est également divulgué dans le document FR2914700A1.

Lorsque le moteur d'un tel ensemble propulsif doit être déposé, il est généralement nécessaire de déposer préalablement l'intégralité de l'inverseur compte tenu de l'encombrement des demi-structures et de la course d'ouverture limitée notamment du fait de la présence du cadre avant. A fortiori, lorsque l'inverseur de poussée comprend des grilles de déviation mobiles, celles-ci enveloppent le moteur y compris lorsque la structure mobile est reculée, empêchant dès lors la dépose du moteur.

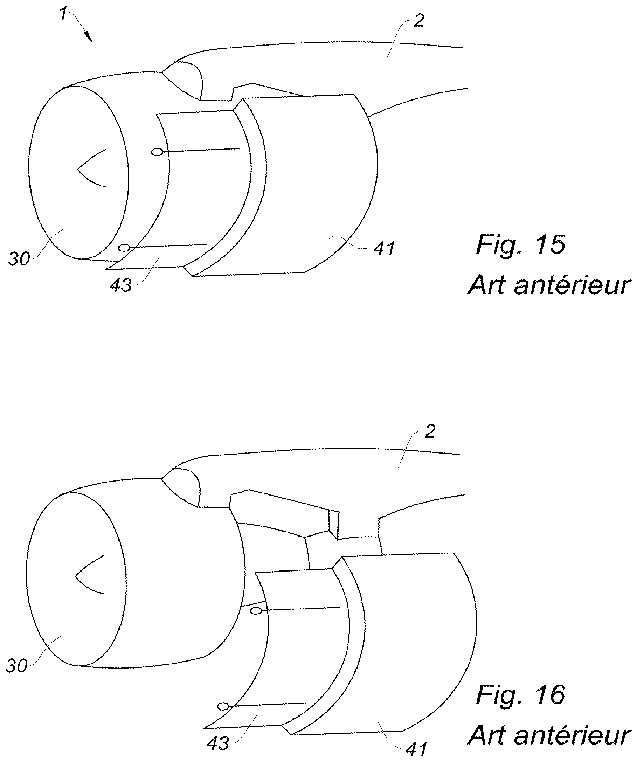

Une opération de dépose successive de l'inverseur de poussée et du moteur est illustrée aux figures 15 et 16. La figure 15 montre l'inverseur en position initiale, fixé au mât réacteur 2, la structure mobile 41 et les grilles de déviation 43 enveloppant le moteur 30. La figure 16 illustre le démontage de la structure mobile 41 et des grilles de déviation 43, à l'issue duquel le moteur 30 peut être désolidarisé du mât réacteur 2.

Un tel démontage et remontage correspondant augmentent considérablement la durée d'une opération de maintenance lorsque la dépose du moteur est requise.

Un but de la présente invention est de proposer un inverseur de poussée et un procédé de maintenance capables de réduire la durée d'une opération de maintenance nécessitant la dépose du moteur.

A cet effet, l'invention se rapporte à un inverseur de poussée pour ensemble propulsif d'aéronef, cet inverseur de poussée comprenant :
- deux poutres agencées pour être fixées, préférentiellement de façon démontable, sur un mât réacteur de l'ensemble propulsif, ces poutres comportant chacune un rail primaire,
- une structure mobile reliée aux rails primaires suivant une liaison glissière autorisant une translation de la structure mobile entre une position de poussé directe et une position d'inversion de poussée, la structure mobile comportant des capots externes mobiles entre une position fermée et une position de maintenance.

Selon l'invention, cet inverseur de poussée comprend :
- des charnières auxquelles sont reliés les capots externes suivant une liaison pivot autorisant leur rotation entre la position fermée et la position de maintenance,
- des rails secondaires agencés pour être fixés sur le mât réacteur de l'ensemble propulsif indépendamment des poutres, les charnières étant reliées à ces rails secondaires suivant une liaison glissière autorisant une translation des capots externes entre une position de poussée directe et une position d'inversion de poussée.

La présence de rails secondaires spécifiques et de charnières reliant les capots externes à ceux-ci permet de rendre indépendante l'ouverture des capots externes relativement aux autres parties de la structure mobile.

Il est ainsi possible de déposer le moteur sans démonter préalablement l'intégralité de l'inverseur compte tenu de l'encombrement réduit des capots externes.

Les inventeurs estiment que, relativement à un inverseur de poussée de la technique antérieure, un inverseur de poussée conforme à l'invention permet de réduire de moitié la durée d'une opération de maintenance incluant la dépose du moteur.

Dans un mode de réalisation, l'inverseur de poussée peut comprendre des grilles de déviation.

Ces grilles de déviation peuvent être mobiles en translation entre une position de poussée directe et une position d'inversion de poussée.

Dans un mode de réalisation, l'inverseur de poussée peut comprendre un dispositif anti-rotation agencé pour empêcher la rotation des charnières autour d'un axe parallèle à un axe de rotation des capots externes.

Un tel dispositif anti-rotation permet d'éviter ou de limiter l'endommagement des rails secondaires sous l'effet du couple exercé par les capots externes lors de leur ouverture et/ou, lorsque les capots externes sont dans la position de maintenance, sous l'effet du vent.

Le dispositif anti-rotation peut comprendre, pour au moins une charnière et rail secondaire correspondant, un élément de support fixe relativement au rail secondaire et un pion de blocage relié à l'élément de support et traversant une ouverture réalisée dans la charnière.

De préférence, ladite ouverture de charnière peut définir ledit axe de rotation du capot externe correspondant.

Dans un mode de réalisation, l'inverseur de poussée peut comprendre des moyens de fixation amovibles agencés pour entraîner les capots externes en translation lorsque la structure mobile est déplacée entre la position de poussée directe et la position d'inversion de poussée. Alternativement ou en complément de tels moyens de fixation, les capots externes et un ou plusieurs autres éléments de la structure mobile peuvent comprendre des moyens de coopération assurant l'entraînant des capots externes lorsque la structure mobile est déplacée entre la position de poussée directe et la position d'inversion de poussée. Ces moyens de coopération peuvent par exemple être agencés de manière à coupler les capots externes auxdits autres éléments de la structure mobile lorsque les capots externes sont en position fermée, et de manière à découpler les capots externes desdits autres éléments de la structure mobile lorsque les capots externes sont en position de maintenance.

Selon un aspect, l'invention concerne aussi un ensemble propulsif d'aéronef comprenant un mât réacteur et un inverseur de poussée tel que décrit ci-dessus.

Selon encore un autre aspect, l'invention concerne aussi un procédé de maintenance d'un tel ensemble propulsif d'aéronef, ce procédé comprenant :
- une étape de positionnement des capots externes en position de maintenance,
- une étape de dépose des poutres et des parties de la structure mobile autres que les capots externes.

D'autres caractéristiques et avantages de l'invention apparaîtront à la lecture de la description nullement limitative qui suit et des figures annexées, dans lesquelles :
- La figure 1 est une vue schématique en perspective d'un ensemble propulsif avec inverseur de poussée à grilles de déviation mobiles en position de poussée directe ;
- La figure 2 est une vue schématique en perspective de l'ensemble propulsif de la figure 1, l'inverseur de poussée étant en position d'inversion de poussée ;
- Les figures 3 à 5 sont des vues schématiques en perspective de parties de l'ensemble propulsif de la figure 1, faisant apparaître les grilles de déviation et des rails de déplacement de ces grilles :
   ∘ Les figures 3 et 4 montrent les grilles en position de poussée directe,
   ∘ La figure 5 montre les grilles en position d'inversion de poussée ;
- Les figures 6 et 7 illustrent de manière schématique un mât réacteur et un inverseur de poussée selon l'invention ; ces figures illustrent en particulier le principe de dissociation structurelle d'un capot externe relativement aux autres éléments de la structure mobile :
   ∘ La figure 6 montre le capot externe en position fermée et les autres éléments de la structure mobile reliés au mât réacteur,
   ∘ La figure 7 montre le capot externe en position de maintenance et les autres éléments de la structure mobile désolidarisés du mât réacteur ;
- La figure 8 est une vue schématique en perspective d'un ensemble propulsif selon l'invention, avec inverseur de poussée à grilles de déviation mobiles en position de poussée directe ;
- La figure 9 est une vue schématique en perspective de l'ensemble propulsif de la figure 8, le capot externe étant en position de maintenance, le moteur et les autres éléments de l'inverseur étant désolidarisés du mât réacteur ;
- La figure 10 est une vue schématique en perspective d'une partie d'un inverseur de poussée selon l'invention, montrant une charnière reliant un capot externe à un rail secondaire ;
- Les figures 11 à 13 sont des vues schématiques en perspective d'une partie d'un inverseur de poussée selon l'invention, équipé d'un dispositif anti-rotation :
   ∘ La figure 11 montre l'inverseur en position de poussée directe,
   ∘ La figure 12 montre l'inverseur en position d'inversion de poussée,
   ∘ La figure 13 montre le capot externe en position de maintenance ;
- La figure 14 est une vue schématique en perspective d'un ensemble propulsif de la technique antérieure, comprenant un inverseur de poussée en position de maintenance ;
- Les figures 15 et 16 sont des vues schématiques en perspective de parties d'un ensemble propulsif de la technique antérieure, comprenant un inverseur de poussée à grilles de déviation mobiles :
   ∘ La figure 15 montre l'inverseur en position de poussée directe,
   ∘ La figure 16 montre l'inverseur désolidarisé du mât réacteur.

Les éléments identiques ou similaires sont repérés par des signes de référence identiques sur l'ensemble des figures.

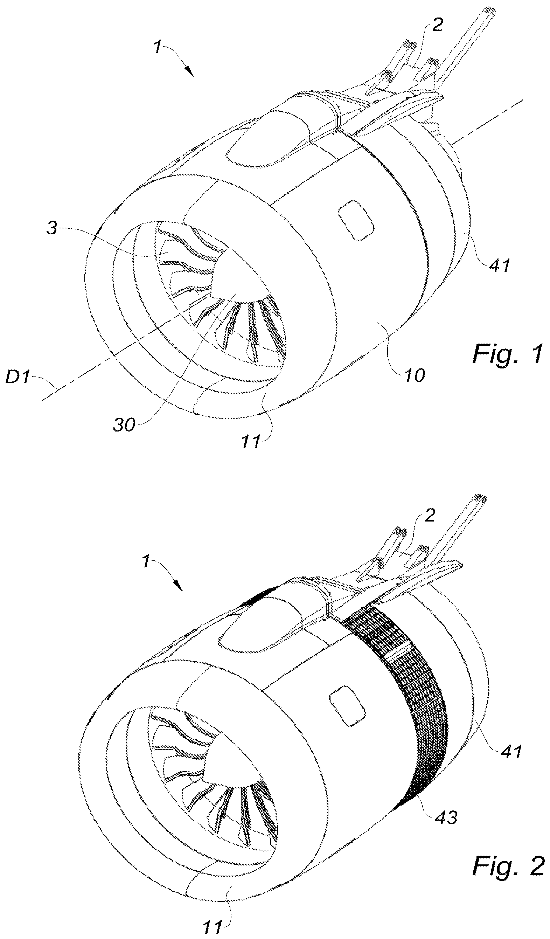

L'invention concerne un inverseur de poussée pour un ensemble propulsif 1 tel qu'illustré à la figure 1.

Cet ensemble propulsif 1 comprend une nacelle logeant un moteur 30 de type turboréacteur à double flux, ainsi qu'un mât réacteur 2, partiellement représenté, destiné à être fixé à une aile (non représentée) d'un aéronef (non représenté).

La nacelle comprend une entrée d'air 11 adaptée pour permettre la captation optimale vers le moteur 30 de l'air nécessaire à l'alimentation d'une soufflante 3 et de compresseurs internes (non représentés) du moteur.

L'ensemble propulsif 1 s'étend suivant une direction D1 passant par l'axe du moteur 30.

Cet ensemble propulsif 1 comporte un inverseur de poussée comprenant une structure mobile 41 et des grilles de déviation 43 visibles notamment à la figure 2.

La structure mobile 41 est prévue pour coulisser le long de la direction D1 entre une position de poussée directe (figure 1) et une position d'inversion de poussée (figure 2).

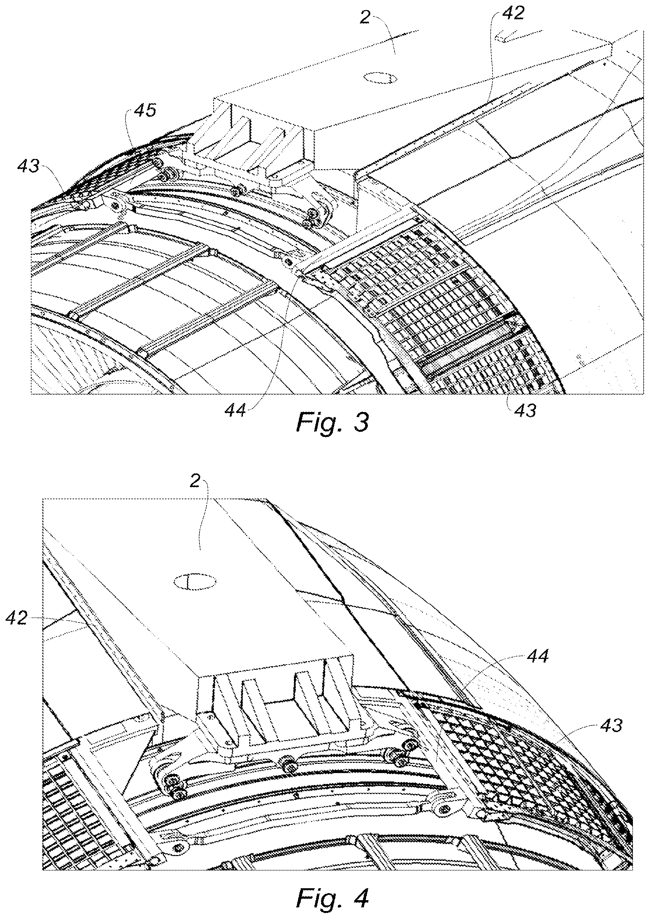

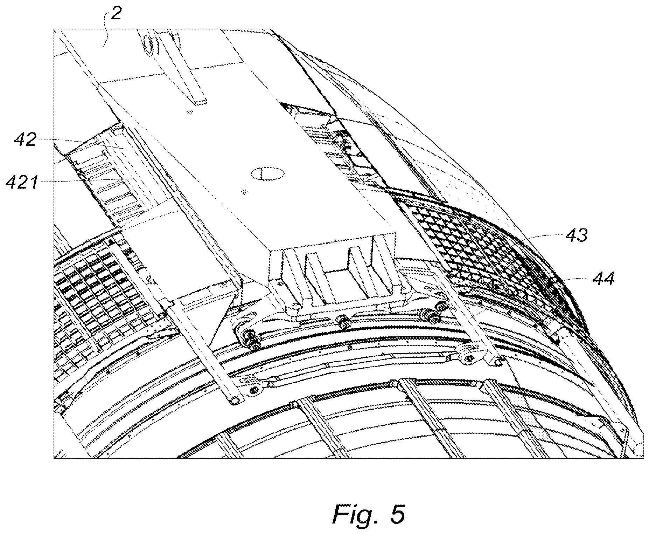

Les grilles de déviation 43 sont dans cet exemple mobiles en translation, le long de la direction D1, entre une position de poussée directe (figures 3 et 4) et une position d'inversion de poussée (figure 5).

En poussée directe, la structure mobile 41 ainsi que les grilles de déviation 43 sont dans la position de poussée directe, les grilles 43 étant alors recouvertes par le carénage 10 de la nacelle (voir figure 1).

En inversion de poussée, la structure mobile 41 ainsi que les grilles de déviation 43 sont dans la position d'inversion de poussée, les grilles 43 étant alors à découvert entre le carénage 10 et la structure mobile 41 (voir figure 2).

Pour des raisons purement illustratives, les figures 1, 2 et 6 à 13 montrent uniquement une première demi partie de la structure mobile, visée par la référence 41 ou encore par les références 411 et 412 (voir plus loin). Bien entendu, la structure mobile comprend une deuxième demi partie symétrique à la première demi partie et fonctionnant de manière similaire. Ainsi, tout ce qui est décrit dans le présent document à l'égard de la première demi partie 41 s'applique mutatis mutandis à ladite deuxième partie non représentée sur ces figures. Pour simplifier la présente description, les caractéristiques relatives à la structure mobile dans son ensemble sont décrites en se référant dans les figures uniquement à ladite première demi partie de cette structure mobile.

La translation de la structure mobile 41 entre la position de poussé directe et la position d'inversion de poussée est réalisée par l'intermédiaire de rails primaires 421 réalisés ou logés dans des poutres 42 respectives (voir figures 3 à 5). Pour ce faire, la structure mobile 41 est reliée à ces rails primaires 421 suivant une liaison glissière.

La translation des grilles de déviation 43 entre la position de poussé directe et la position d'inversion de poussée est réalisée par l'intermédiaire de rails de grilles 44 et 45 situés de part et d'autre du mât réacteur 2 (voir figures 3 à 5). Pour ce faire, les grilles de déviation 43 sont reliées à ces rails de grilles 44 et 45 suivant une liaison glissière.

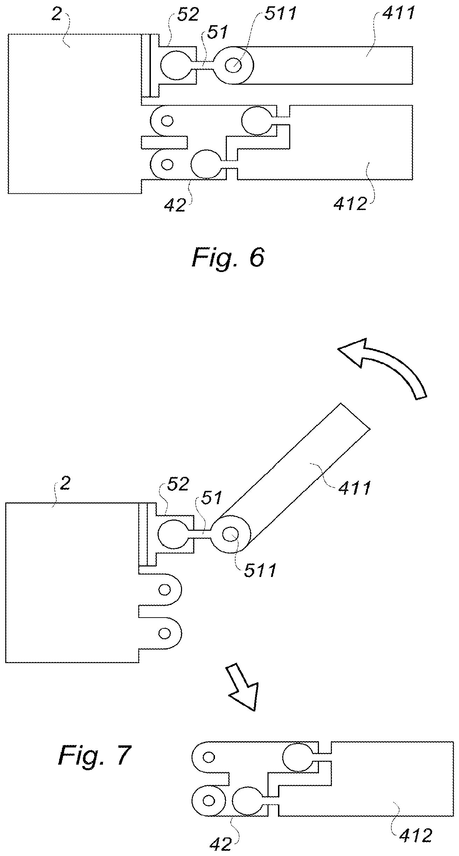

En référence aux figures 6 à 9, la structure mobile 41 comporte des capots externes 411 mobiles entre une position fermée et une position de maintenance. Les capots externes 411 sont représentés en position fermée aux figures 1, 2, 6, 8 et 10 à 12. Ils sont représentés ouverts, en position de maintenance, aux figures 7, 9 et 13.

L'inverseur de poussée selon l'invention comprend des rails secondaires 52 agencés pour être fixés sur le mât réacteur 2 de l'ensemble propulsif 1 indépendamment des poutres 42, comme illustré par exemple aux figures 6 et 7. Ces rails secondaires 52 ne sont pas représentés sur les figures 3 à 5.

En outre, l'inverseur de poussée selon l'invention comprend des charnières 51 reliées aux rails secondaires 52 suivant une liaison glissière autorisant une translation des capots externes 411 entre une position de poussée directe (figure 1) et une position d'inversion de poussée (figure 2).

A titre d'exemples non limitatifs, la translation des capots externes 411 entre la position de poussée directe et la position d'inversion de poussée peut être réalisée par des moyens de fixation (non représentés) amovibles agencés pour entraîner les capots externes 411 en translation lorsque les autres parties 412 de la structure mobile 41 sont déplacées entre la position de poussée directe et la position d'inversion de poussée, et/ou par des moyens de coopération entre les capots externes 411 et lesdits autres parties 412 de la structure mobile 41, et/ou par des actionneurs (non représentés) spécifiques.

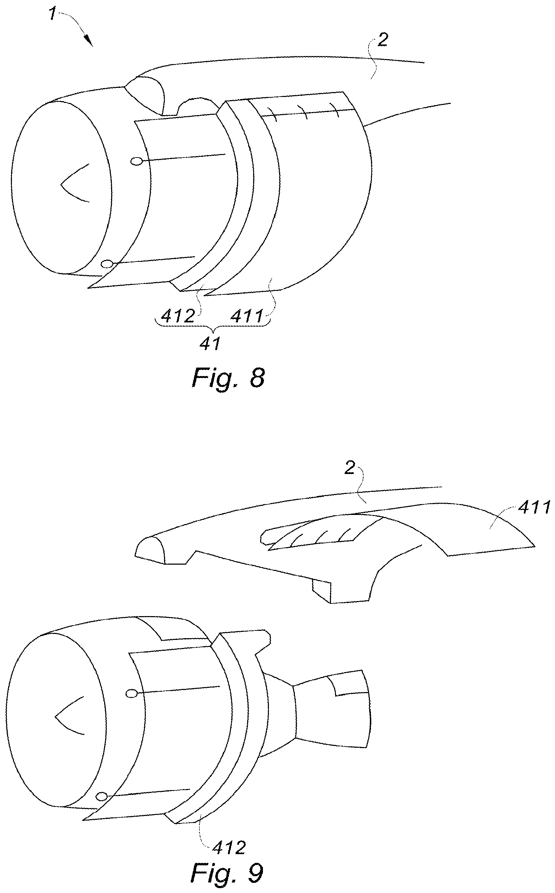

Les capots externes 411 sont reliés aux charnières 51 suivant une liaison pivot autorisant leur rotation entre la position fermée (figures 6 et 8) et la position de maintenance (figures 7 et 9). Dans cet exemple, la rotation des capots externes 411 est réalisée autour d'un axe de rotation D2 respectif parallèle à la direction D1 (voir figure 10).

Grâce à un tel inverseur de poussée, on peut réaliser plus rapidement une opération de maintenance avec dépose du moteur tout en conservant un inverseur avec structure mobile susceptible d'ouverture vers l'extérieur.

Un procédé de maintenance correspondant comprend typiquement une étape de positionnement des capots externes 411 en position de maintenance suivie d'une étape de dépose des poutres 42 et des parties 412 de la structure mobile 41 autres que les capots externes 411 (voir figure 7).

La dépose du moteur 30 peut être réalisée lors de cette étape de dépose ou ultérieurement.

Dans un mode de réalisation, l'inverseur de poussée comprend un dispositif anti-rotation tel qu'illustré aux figures 11 à 13.

Ce dispositif anti-rotation est agencé pour empêcher la rotation des charnières 51 autour d'un axe parallèle à l'axe D2 de rotation des capots externes 411.

Dans cet exemple, le dispositif anti-rotation comprend, l'une des charnières 51 du rail secondaire 52, un élément de support 53 fixe relativement au rail secondaire 52 et un pion de blocage 54 relié à l'élément de support 53 et traversant une ouverture 511 réalisée dans la charnière 51 (voir aussi figures 6 et 7).

Cette ouverture 511 de charnière 51 définit dans cet exemple ledit axe D2 de rotation du capot externe 411 correspondant.

Bien entendu, l'invention n'est pas limitée aux exemples qui viennent d'être décrits et de nombreux aménagements peuvent être apportés à ces exemples sans sortir du cadre de l'invention. Par exemple, le dispositif anti-rotation peut comprendre un élément de support 53 et un pion de blocage 54 correspondant de part et d'autre de chaque capot externe 411.

## Revendications

1. Inverseur de poussée pour ensemble propulsif (1) d'aéronef, cet inverseur de poussée comprenant :
- deux poutres (42) agencées pour être fixées de façon démontable sur un mât réacteur (2) de l'ensemble propulsif (1), ces poutres (42) comportant chacune un rail primaire (421),
- une structure mobile (41) reliée aux rails primaires (421) suivant une liaison glissière autorisant une translation de la structure mobile (41) entre une position de poussé directe et une position d'inversion de poussée, la structure mobile (41) comportant des capots externes (411) mobiles entre une position fermée et une position de maintenance,
- des charnières (51) auxquelles sont reliés les capots externes (411) suivant une liaison pivot autorisant leur rotation entre la position fermée et la position de maintenance,
cet inverseur de poussée étant **caractérisé en ce qu'**il comprend :
- des rails secondaires (52) agencés pour être fixés sur le mât réacteur (2) de l'ensemble propulsif (1) indépendamment des poutres (42), les charnières (51) étant reliées à ces rails secondaires (52) suivant une liaison glissière autorisant une translation des capots externes entre une position de poussée directe et une position d'inversion de poussée.

2. Inverseur de poussée selon la revendication 1, comprenant des grilles (43) de déviation.

3. Inverseur de poussée selon la revendication 2, dans lequel les grilles (43) de déviation sont mobiles en translation entre une position de poussée directe et une position d'inversion de poussée.

4. Inverseur de poussée selon l'une quelconque des revendications précédentes, comprenant un dispositif anti-rotation (53, 54) agencé pour empêcher la rotation des charnières (51) autour d'un axe parallèle à un axe (D2) de rotation des capots externes (411).

5. Inverseur de poussée selon la revendication 4, dans lequel le dispositif anti-rotation comprend, pour au moins une charnière (51) et rail secondaire (52) correspondant, un élément de support (53) fixe relativement au rail secondaire (52) et un pion de blocage (54) relié à l'élément de support (53) et traversant une ouverture (511) réalisée dans la charnière (51).

6. Inverseur de poussée selon la revendication 5, dans lequel ladite ouverture (511) de charnière (51) définit ledit axe (D2) de rotation du capot externe (411) correspondant.

7. Inverseur de poussée selon l'une quelconque des revendications précédentes, comprenant des moyens de fixation amovibles agencés pour entraîner les capots externes (411) en translation lorsque la structure mobile (41) est déplacée entre la position de poussée directe et la position d'inversion de poussée.

8. Ensemble propulsif (1) d'aéronef comprenant un mât réacteur (2) et un inverseur de poussée selon l'une quelconque des revendications précédentes.

9. Procédé de maintenance d'un ensemble propulsif (1) d'aéronef selon la revendication 8, comprenant :
- une étape de positionnement des capots externes (411) en position de maintenance,
- une étape de dépose des poutres (42) et des parties de la structure mobile (41) autres que les capots externes (411).

## Patentansprüche

1. Schubumkehrer für eine Flugzeugantriebseinheit (1), wobei der Schubumkehrer Folgendes umfasst:
- zwei Träger (42), die so angeordnet sind, dass sie lösbar an einem Triebwerksmast (2) der Antriebseinheit (1) befestigt werden können, wobei die Träger (42) jeweils eine Primärschiene (421) umfassen,
- eine bewegliche Struktur (41), die mit den Primärschienen (421) über eine Gleitverbindung verbunden ist, die eine Verschiebung der beweglichen Struktur (41) zwischen einer direkten Schubposition und einer Schubumkehrposition ermöglicht, wobei die bewegliche Struktur (41) äußere Abdeckungen (411) umfasst, die zwischen einer geschlossenen Position und einer Wartungsposition bewegbar sind,
- Scharniere (51), mit denen die äußeren Abdeckungen (411) über eine Drehverbindung verbunden sind, die ihre Drehung zwischen der geschlossenen Position und der Wartungsposition ermöglicht,
wobei der Schubumkehrer **dadurch gekennzeichnet ist, dass** er Folgendes umfasst:
- Sekundärschienen (52), die so angeordnet sind, dass sie unabhängig von den Trägern (42) am Triebwerksmast (2) der Antriebseinheit (1) befestigt werden können, wobei die Scharniere (51) mit den Sekundärschienen (52) über eine Gleitverbindung verbunden sind, die eine Verschiebung der äußeren Abdeckungen zwischen einer direkten Schubposition und einer Schubumkehrposition ermöglicht.

2. Schubumkehrer nach Anspruch 1, der Umlenkgitter (43) umfasst.

3. Schubumkehrer nach Anspruch 2, wobei die Umlenkgitter (43) translatorisch zwischen einer direkten Schubposition und einer Schubumkehrposition bewegbar sind.

4. Schubumkehrer nach einem der vorhergehenden Ansprüche, der eine Anti-Drehvorrichtung (53, 54) umfasst, die so angeordnet ist, dass sie die Drehung der Scharniere (51) um eine Achse parallel zu einer Drehachse (D2) der äußeren Abdeckungen (411) verhindert.

5. Schubumkehrer nach Anspruch 4, wobei die Anti-Drehvorrichtung für mindestens ein Scharnier (51) und eine entsprechende Sekundärschiene (52) ein Stützelement (53), das relativ zur Sekundärschiene (52) befestigt ist, und einen Blockierzapfen (54), der mit dem Stützelement (53) verbunden ist und die im Scharnier (51) vorgesehene Öffnung (511) durchquert, umfasst.

6. Schubumkehrer nach Anspruch 5, wobei die Öffnung (511) des Scharniers (51) die Drehachse (D2) der entsprechenden äußeren Abdeckung (411) definiert.

7. Schubumkehrer nach einem der vorhergehenden Ansprüche, der abnehmbare Befestigungsmittel umfasst, die so angeordnet sind, dass sie die äußeren Abdeckungen (411) translatorisch antreiben, wenn die bewegliche Struktur (41) zwischen der direkten Schubposition und der Schubumkehrposition verschoben wird.

8. Flugzeugantriebseinheit (1), die einen Triebwerksmast (2) und einen Schubumkehrer nach einem der vorhergehenden Ansprüche umfasst.

9. Verfahren zum Warten einer Flugzeugantriebseinheit (1) nach Anspruch 8, das Folgendes umfasst:
- einen Schritt des Positionierens der äußeren Abdeckungen (411) in der Wartungsposition,
- einen Schritt des Abnehmens der Träger (42) und der Teile der beweglichen Struktur (41), die nicht die äußeren Abdeckungen (411) sind.

## Claims

1. A thrust reverser for an aircraft propulsion unit (1), this thrust reverser comprising:
- two beams (42) arranged so as to be removably fastened on a reactor mast (2) of the propulsion unit (1), each of these beams (42) including a primary rail (421),
- a movable structure (41) linked to the primary rails (421) according to a sliding connection enabling a translation of the movable structure (41) between a direct thrust position and a thrust reversal position, the movable structure (41) including outer cowls (411) movable between a closed position and a maintenance position,
- hinges (51) to which the outer cowls (411) are linked according to a pivot connection enabling the rotation thereof between the closed position and the maintenance position,
this thrust reverser being **characterized in that** it comprises:
- secondary rails (52) arranged so as to be fastened on the reactor mast (2) of the propulsion unit (1) independently of the beams (42), the hinges (51) being linked to these secondary rails (52) according to a sliding connection enabling a translation of the outer cowls between a direct thrust position and a thrust reversal position.

2. The thrust reverser according to claim 1, comprising cascade vanes (43).

3. The thrust reverser according to claim 2, wherein the cascade vanes (43) are movable in translation between a direct thrust position and a thrust reversal position.

4. The thrust reverser according to any one of the preceding claims, comprising an anti-rotation device (53, 54) arranged so as to prevent the rotation of the hinges (51) about an axis parallel to an axis (D2) of rotation of the outer cowls (411).

5. The thrust reverser according to claim 4, wherein the anti-rotation device comprises, for at least one hinge (51) and corresponding secondary rail (52), a support element (53) fixed with respect to the secondary rail (52) and a blocking pin (54) linked to the support element (53) and passing through an opening (511) formed in the hinge (51).

6. The thrust reverser according to claim 5, wherein said hinge (51) opening (511) defines said axis (D2) of rotation of the corresponding outer cowl (411).

7. The thrust reverser according to any one of the preceding claims, comprising removable fastening means arranged so as to drive the outer cowls (411) in translation when the movable structure (41) is displaced between the direct thrust position and the thrust reversal position.

8. An aircraft propulsion unit (1) comprising a reactor mast (2) and a thrust reverser according to any one of the preceding claims.

9. A method for maintaining an aircraft propulsion unit (1) according to claim 8, comprising:
- a step of positioning the outer cowls (411) in the maintenance position,
- a step of putting down the beams (42) and the portions of the movable structure (41) other than the outer cowls (411).
